# EUROPEAN PATENT SPECIFICATION

(11) **EP 4 288 673 B1**
(45) Date of publication and mention of the grant of the patent: **11.11.2026**
(21) Application number: 22702984.0
(22) Date of filing: 02.02.2022
(51) Int. Cl.: F16C 33/64, F16C 33/14, F16C 33/12

(54) **BEARING COMPONENT**
LAGERBAUTEIL
COMPOSANT DE PALIER

(30) Priority: 08.02.2021 DE 102021102832
(43) Date of publication of application: 13.12.2023
(73) Proprietor: Aktiebolaget SKF, 415 50 Göteborg (SE)
(72) Inventor: VON SCHLEINITZ, Thilo, 97422 Schweinfurt (DE)
(74) Representative: Kuhstrebe, Jochen
(86) International application number: PCT/EP2022/052408
(87) International publication number: WO 2022/167451

(56) References cited:
- WO-A1-02/42056
- WO-A1-2012/012818
- WO-A2-2005/033353

## Description

The present invention relates to a bearing component, such as, for example, a bearing ring, according to patent claim 1.

For the manufacturing of bearing components, such as, for example, rings for plain bearings or rolling-element bearings, as disclosed in WO 2012/012818 A1, premanufactured blanks are usually used that are then manufactured to shape and size. However, this is limited here to the sizes and dimensions of available blanks, i.e. to bearing components of existing type ranges. A manufacturing of individual bearing components having dimensions that differ greatly from the available blanks is only possible with great expense.

Furthermore, it is dependent on certain materials from which blanks are usually manufactured. A manufacturing of individual bearing components, such as, for example, bearing rings, using materials that differ from conventionally available compositions is therefore hardly possible.

The object of the present invention is therefore to make possible a simpler and more flexible manufacturing of a bearing component.

This object is achieved by a bearing component according to patent claim 1.

In order to make possible an individual manufacturing having individual dimensions, the bearing component is not manufactured to size from a blank, but rather is built up by a plurality of layers that are applied one onto another using a cold-spray method. Here the finished bearing component is comprised of a plurality of radially and/or axially extending layers.

In the cold-spray method, in particular a high-pressure cold-spray method, also called cold-gas coating or cold spraying, a preheated gas jet is generated into which a predominantly metallic powder is fed, which, however, is not melted. The powder can include, for example, iron, zinc, copper, tin, aluminum, steel, or a combination thereof. In plain bearings, in particular materials such as bronze, babbitt, white metal, and various copper alloys are possible and advantageous. The powder is applied onto a substrate that can form a part of the bearing component or merely serves as base, as is further explained in more detail below. For the lowest layer, the process can therefore be set via the choice of spray material to substrate material, impact energy, and angle of incidence such that an easily releasable connection of the powder to the substrate is effected. For the subsequent layers, the gas jet is set such that the powder connects to the surface in a fusing manner and forms a metal or metal-alloy layer.

For manufacturing, a largely fixed but pivotable cold spray gun can be used that applies the material (i.e., the gas jet including fed-in powder) onto a rotating workpiece carrier, usually a turntable rotating on a horizontal axis and about a vertical axis, wherein the turntable makes a plurality of rotations up to the completion of the ring. The resulting bearing component is thus manufactured by layer-by-layer construction.

The cold-spray gun can be held and guided by a movable and pivotable robot arm. The robot can in particular be adjacent to the horizontal turntable. It is also possible to arrange a plurality of robots including cold-spray guns around the turntable and program a simultaneous processing. Since the gun can be pivoted at an angle, both a vertical and a horizontal spraying, as well as any arbitrary intermediate angle setting, are possible. During vertical spraying, a bearing component, for example, a ring, is built up layer by layer, which bearing component obtains ever more height and thus (ring) width. When the gun is set horizontally, a layer development is generated that increases the radial extension of the bearing component.

Due to the cold-spray method, the bearing component can thus be manufactured in a type of 3D printing without being dependent on existing sizes and dimensions. This means that a bearing component having arbitrary dimensions can be manufactured without consideration of standard sizes. Here in particular bearing components are even possible for large bearings having a diameter of more than 1m.

Here the 3D printing is effected layer by layer, and the layers can have different compositions and properties as is explained in more detail below. However, it should be noted here that the layers are not a coating in the conventional sense, i.e., no already-present bearing component is provided with a coating. Instead, (for the most part) the entire bearing component is printed from powder using the cold-spray method, with layers, possibly having different properties, being created within this printing.

**In** contrast to other methods, such as, for example, for flame spraying, no thermal load due to the cold-spray method arises on the substrate and the component itself, which thermal load could be detrimental to the properties of the bearing component and the residual stresses of each applied layer. **In** the cold-spray method, the thermal effect on the underlying layer is significantly smaller, whereby the surfaces and structures of the individual layers are not or are hardly impaired. **In** particular, the bearing component can be manufactured without deformation, which is not necessarily ensured with other additive manufacturing methods.

While with flame spraying, a roughened, for example, sandblasted, substrate surface is required, this is also not the case with the cold-spray method. The different layers can therefore be applied directly one onto another without an intermediate processing being required.

As mentioned above, the layers are preferably applied using a high-pressure cold-spray method, preferably at more than 50 bar. In particular the pressure of the gas jet can fall in the range of 50 to 100 bar. In contrast to the low-pressure cold-spray method, the high-pressure cold-spray method makes possible a particularly good fusing of the particles among one another and the possibility of low porosity, whereby a mechanically stable printed bearing component can be generated.

Due to this high pressure, the gas jet, typically nitrogen, is accelerated via a nozzle to multiple times the speed of sound. Here the particles of the powder in the gas jet strike the surface of the respective topmost layer with high kinetic energy, in particular at a speed of up to 1000 m/s. However, the powder particles here are not hot or molten. Rather, the particles adhere to the surface by local transfer of kinetic energy, which leads to a fusing of the powder onto the surface. A "fusing" is understood here to mean an adhesion that falls far above the values of mechanical interlocking. The adhesion mechanism in the cold-spray method, in particular high-pressure cold-spray method, is therefore not based on an interlocking of the particles on the surface, as is the case with a flame spraying, but rather on a connecting of the powder to the surface, which leads to a high adhesion.

According to one embodiment, the bearing component can subsequently be mechanically processed by turning, grinding, or the like. For example, the bearing component can be brought to the exact final dimension, or be modified in its surface quality.

According to a further embodiment, the plurality of layers are applied using the cold-spray method onto a non-dimensionally stable carrier material, in particular a metal film, or onto a dimensionally stable carrier material whose volume is less than 50% of the volume of the bearing component.

The carrier material remains on the bearing component, wherein the lowermost cold-spray layer is applied such that it adheres to the carrier material. Due to such a carrier material, it can be ensured that the material applied using the cold-spray method does not adhere to the substrate, but rather to the carrier material. Here the volume of the carrier material is less than 50% of the bearing component, preferably less than 40%, further preferably less than 30%, even further preferably less than 20%. In contrast to a coating wherein the carrier material would constitute the main part of the finished workpiece, here the carrier material, if used at all, is relatively thin-walled, and the substantial component volume is generated only in the process as metal-printing by the cold-spray method.

The carrier material can be comprised, for example, of iron or steel. Furthermore, it can be an already premanufactured element, or also be printed using the cold-spray method.

Alternatively the plurality of layers can be applied in a hollow mold or onto a base plate, wherein the hollow mold or the base plate is removable. As explained above, the setting of the cold-spray method can be chosen such that a releasable connection arises to the substrate, and such that the finished bearing component can be removed from the substrate or from the turntable. In order to facilitate the removal of the bearing component, the base plate or the hollow mold which is only a temporary component used during manufacturing, can be comprised of or be coated with a material, such as silicone, to which the layers applied using the cold-spray method do not adhere or adhere poorly.

If a hollow mold is used, the dimensions of the bearing component can thereby already be specified, so that a particularly simple manufacturing of a bearing component that is correct in terms of shape and size is possible. For example, the mold for a bearing ring to be printed can be comprised of a turntable and two applied rings that define inner diameter and outer diameter of the ring blank to be manufactured. After the printing in this mold, the mold parts are removed and the finished ring is removed. The advantage here is a particularly precise geometry, which minimizes the subsequent post-processing and its chip-removal volume. Such a hollow mold is preferably used when larger quantities of a certain dimension variant are to be repeatedly manufactured.

According to a further embodiment, the plurality of layers of the bearing component proposed here can differ in their density and/or their porosity. Blanks available up to now have a fixed porosity and density. However, the different radially and/or axially extending layers that are applied using the cold-spray method can be adapted in terms of their porosity, and/or density depending on need, and can be changed regionally or continuously. The bearing component can thereby be completely adapted in an application-specific manner.

Layers low in pores can be generated by a higher jet speed. The density of the layer can be influenced by the particle size and the particle shape. These variations are possible both by changing the powder and by changing spray pressure and velocity. Thus, for example, in a region wherein lubricant pockets and oil reservoirs are required, more porous regions can be generated that can be filled with lubricant. Using the cold-spray method it is also possible to apply dry lubricants such as MoS₂ and WS₂ onto the bearing component.

According to a further embodiment, the plurality of radially and/or axially extending layers are comprised of one material or else of different materials. If layers are built up one atop the other from different materials, they can either have sharply delimited transitions or merge continuously into each other.

During the printing of the bearing component, the materials can be varied, for example, in the axial direction of the bearing component, when the cold-spray gun, as described above, is initially oriented vertically. With a horizontally standing gun, a bearing component can be generated that can have changes of the materials in the radial direction. These variations of the material can also be varied in the radial or axial direction.

The plurality of radially and/or axially extending layers of the bearing component can respectively be comprised of a single material or of a material composition. Here, depending on the requirement, the material composition can be adapted to the plain bearing or rolling-element bearing. Thus, for example, the radially or axially outermost layer, which comes into contact with another component and moves relative thereto with use, can be configured as a sliding layer with the corresponding requirements and the material composition associated therewith. However, the innermost layer, which during use does not move relative to another component, but rather, for example, is attached thereto, can have a material composition that is more stable and more robust, or, for example, have a higher roughness in order to make possible such an attaching. For example, this layer can have the function of a friction layer. The base body, i.e., the majority of the radially and/or axially extending layers, is preferably comprised of a single material or a single material composition that provides a sufficient stability for further layers disposed thereon.

Furthermore, a layer can include at least one first region having a first material composition and at least one second region having a second material composition, wherein the first material composition and the second material composition are different. Due to these different regions having different material compositions, not only can each layer be built differently, but also each individual layer can be adapted to the loads that are to be expected over the axial or radial extension or along the circumference of the bearing component.

The first material composition and the second material composition can therefore be adapted to different requirements. For example, an edge region of a layer can be adapted to a load requirement, whereas another region can be optimized with respect to sliding properties or friction properties (in particular in the outermost layer).

A possible composition is comprised, for example, of 50-70% tin, 10-26% antimony, and 9-20% copper. Another possible composition can be comprised of 70-90% copper and 10-20% aluminum. Here there are very many possible compositions, therefore a further enumeration is omitted. Materials in sliding contact are metallic plain-bearing materials typically from the category bronze, babbitt, white metal, or copper alloys. If their composition is changed, for example, by the addition of more copper, variants that are harder and have more load bearing capacity are obtained that are better suited, for example, for the inner and supporting regions of a bearing ring. It should therefore be noted that this composition, and generally the materials mentioned here, are only exemplary examples, and other compositions, combinations, and materials are also possible.

During the applying of the respective layer using the cold-spray method, the material composition is sprayed as powder onto the respective layer lying thereunder. Here as mentioned above, this powder can have different material compositions and be adapted in a manner depending on the region to be sprayed.

If a cold-spray has not only one, but rather two or more powder-supply devices and a control for individually changing these powder feeds, then, for example, any combination of two powder supplies, from a first powder, to a mixture of both powders, up to a second powder, can be processed while the coating process is running. The different layers can be varied in their composition steplessly and without discontinuity.

As explained above generally for layer construction, the transition between the regions with different material composition can be fluid. Due to the cold-spray method, it is possible to not produce clearly separated regions, but rather to produce a fluid transition or course between the regions. This also ensures a minimizing of the material-internal stresses, prevents abrupt hardness transitions that could generate inflow grooves, and prevents material-internal cracking tendencies. During the applying of a layer using the cold-spray method, as mentioned above the powder supply can be changed. In this way a plurality of powders can be applied in different composition. The continuous change of the hardness of a layer is also possible, for example, by one powder supply pumping white-metal powder, and a second powder supply pumping separate copper powder.

According to one embodiment, at least one layer can include three regions in the axial and/or radial extension of the bearing component, wherein the first and the third region have the first material composition, and the second has the second material composition.

By a variation of the compositions in the axial direction, the bearing component can be adapted, for example, in a manner consistent with the load behavior of the bearing ring. Thus the two outer regions can be comprised of a composition capable of bearing more load in order to better support edge pressures and counteract damage due to misalignment and edge pressure. However, the central region, possibly including lubricant bores, can be tribologically optimized in its composition for particular sliding properties.

Due to a variation of the compositions in the radial direction, the bearing component can be adapted in particular with respect to the wear behavior. Thus in the context of wear, a lower-lying layer can be released that serves as a wear-indicator layer, as is explained in more detail below. This layer can also have emergency running properties, so that no direct exchange of the bearing component is required, but rather this layer can at least temporarily assume the function of the original, but worn out, layer disposed thereon.

In particular, according to one embodiment, a radially and/or axially outermost or innermost layer can have the function of a sliding layer. Such a sliding layer is advantageous in particular when the bearing component is configured as a plain bearing component. If the bearing component is, for example, an inner ring or an axle bolt, then a radially outermost layer can be configured as a sliding layer. However, if the bearing component is an outer ring, then a radially innermost layer can be a sliding layer. Due to such a sliding layer, for example, the inner ring and the outer ring of a plain bearing can rotate relative to each other in a particularly low-friction manner.

Furthermore, there are axial bearings that require end side sliding layers. In this case the sliding layer can be located on one or on both end sides of the bearing component. Furthermore, an end side can be manufactured as a sliding layer, and the second end side as carrier material, for example, with a steel back.

After the applying of the sliding surface, the sliding surface can be post-processed, e.g., ground, in order to obtain a corresponding dimension and a surface finish. After the application, the primary sliding surface can have a thickness of 0.4 to 0.8 mm, and can be ground down by the grinding process to, for example, 0.3 to 0.6 mm. This does not rule out that regions of the printed bearing component lying thereunder can still have sliding properties, for example, having higher base hardnesses. Even the entire bearing component can include throughout a material having good sliding properties.

The sliding surface applied by the cold-spray method can include few pores, so that a lubricant that is introduced into the bearing does not fall into the pores of the sliding surface, whereby it could no longer contribute to lubricating, but rather remains on the surface in order to make possible a hydrodynamic lubricant film. At the same time a high contact ratio and a high load capacity of the bearing surface can be achieved.

Alternatively the sliding surface can be manufactured porous in order to store lubricant and to release it under pressure and load. This is useful if otherwise insufficient lubrication in the contact point would otherwise be of concern. Which variant is used depends on the construction and the use case.

The sliding surface is preferably comprised of a material composition. As is explained above, the sliding surface can include white metal (in particular bearing material for plain bearings based on tin or lead), iron, zinc, copper, tin, aluminum, lead, babbitt (in particular bearing material for sliding bearings based on tin, lead, or cadmium), or a combination thereof.

According to a further embodiment, as mentioned above, a wear-indicator layer can be applied under the sliding surface using the cold-spray method in order to recognize wear of the sliding surface. In operation, the sliding surface that is applied onto the wear indicator layer can be worn down over time under unfavorable circumstances. Due to wearing down of the sliding layer, the wear-indicator layer lying thereunder is then partially exposed. If the wear indicator layer thereby comes into contact with the sliding countersurface, the wear indicator layer is also worn down. During a lubricant analysis, elements of the wear-indicator layer can then be detected in the lubricant of the bearing. If such elements are detected, this is an indication that the sliding surface is worn down, and the corresponding component must either be exchanged or the sliding surface must be renewed. This embodiment thus makes it possible to carry out a continuous or periodic verification of the bearing points of a transmission without having to dismantle the transmission or even only having to stop it. Provided no corresponding indicator element is present in the lubricant, it can be assumed without doubt that all bearing points are in order.

Alternatively or additionally the wear indicator layer can be dyed or differ in its color from the above-lying sliding surface. Due to such a color difference, a wear can also be recognized by visual examination if, for example, the transmission is dismantled.

The wear indicator layer is preferably a layer that also shows sliding properties in order to maintain a low-friction sliding between the bearing components even with wearing down of the actual sliding surface.

According to one embodiment, the bearing component is a plain bearing component or a rolling-element bearing component, in particular an inner ring or an outer ring. The bearing component can also be an axle bolt that forms in particular an inner ring.

In summary, due to the bearing component proposed here it is possible to manufacture radial or axial plain bearings and/or radial or axial rolling-element bearings in a customer-specific or application-specific manner. Instead of a warehousing of bearing component blanks having fixed dimensions and non-variable materials, and a limited range of bearings resulting therefrom, only different powders are now stockpiled. By the selection of the suitable powder and a suitable programming of the machine, any diameter, any width, any material composition and any porosity can immediately be printed, and thus customer requests or application requirements can be met.

Here the bearing component is formed radially and/or axially layered. Here the plurality of layers can vary radially or axially, or axially and radially, in their material composition. In addition, by setting the process parameters, the pore size of the radial and/or axial layers can be changed, in order to make possible or to prevent the receiving of lubricant.

Further advantages and advantageous embodiments are specified in the description, the drawings, and the claims. Here in particular the combinations of features specified in the description and in the drawings are purely exemplary, so that the features can also be present individually or combined in other ways.

In the following the invention is described in more detail using the exemplary embodiments depicted in the drawings. Here the exemplary embodiments and the combinations shown in the exemplary embodiments are purely exemplary and are not intended to define the scope of the invention. This scope is defined solely by the pending claims.
Fig. 1 shows a schematic sectional view of a first layer as base body of a bearing component;
Fig. 2 shows a schematic sectional view of the base body of Fig. 1 including a plurality of radially extending layers;
Fig. 3 shows a schematic perspective view of the base body of Fig. 1 including a plurality of axially extending layers; and
Figures 4-6 show a schematic view of a layer construction of the bearing component of Figs. 2 and 3.

In the following, identical or functionally equivalent elements are designated by the same reference numbers.

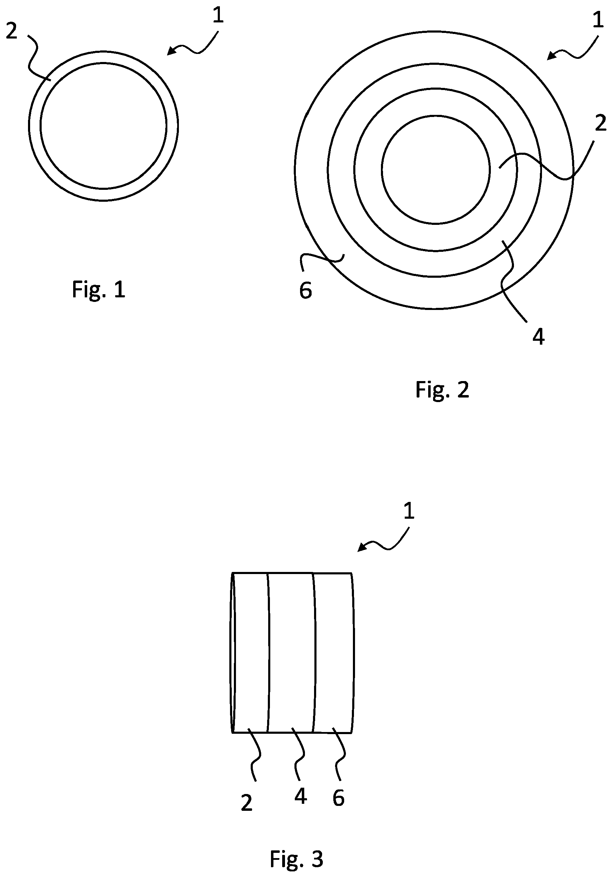

Fig. 1 shows a schematic sectional view of a base body 2 of a bearing component 1. The bearing component 1 can be an inner ring or an outer ring of a plain bearing or rolling-element bearing. The bearing component 1 can also be an axle bolt that forms the inner ring.

The base body 2 can be comprised of iron, steel, or similar materials, and is manufactured using a cold-spray method. For this purpose a preheated gas jet is generated, into which a predominantly metallic powder is fed-in, which, however, is not melted. This gas jet can be sprayed onto a carrier material that remains on the base body 2. The carrier material can be applied onto a turntable, and the base body can be sprayed onto the carrier material.

Due to the use of the cold-spray method, the bearing component 1 can be manufactured individually as a free-form part. In this way individual requirements can be responded to even with smaller quantities.

For the manufacturing of the base body 2, a cold-spray gun is first aligned perpendicular to the carrier material, i.e., into the plane of the paper. The bearing component 1 can include radially and/or axially extending layers.

If radially extending layers are formed, first one or more layers are sprayed-on until a sufficient axial thickness of the base body 2 is achieved. Here the gas jet is set such that the powder connects to the first layer in a fusing manner and forms a metal or metal alloy layer.

Subsequently, further circumferential layers 4, 6 are applied onto the outer circumference (as shown in Fig. 2), or the inner circumference (not depicted) of the annular base body 2. For this purpose the cold-spray gun is rotated by up to 90° in order to be able to spray the outer circumference or inner circumference. The further circumferential layers can be, for example, a sliding layer or friction layer, or the like, as is explained in more detail below.

If axially extending layers are formed, one or more further layers 4, 6 are sprayed perpendicular to the carrier material with identical orientation of the cold-spray gun, as is depicted in Fig. 3. The gas jet is also set here such that the powder connects to the first layer in a fusing manner and forms a metal or metal alloy layer. The further layers 4, 6 can also be a sliding layer, friction layer, or the like, as is explained in more detail below.

The axially extending layer construction (Fig. 3), and the radially extending layer construction (Fig. 2) can also be combined so that there are both radially and axially extending layers. Furthermore, each of the layers 2, 4, 6 can change in their radial or axial extension in their material composition, which can be achieved during the spraying of a layer 2, 4, 6 by a changing powder supply.

Although three layers 2, 4, 6 are shown, arbitrarily many further layers can be applied one atop the other. The layers 2, 4, 6 can be adapted on the one hand in their material composition, and can be adapted on the other hand, depending on the requirement, in their porosity, or density.

The material composition can vary in axial and/or radial extension both for the base body 2 and the further layers 4, 6. As is mentioned above, both the base body 2 and the further layers 4, 6 are manufactured using a cold-spray method. Here a powder that can include different material compositions is sprayed with high pressure either onto a base such as a carrier material or the already existing layers 2, 4. During the spraying, the material composition of the powder can be adapted arbitrarily so that in particular a fluid transition can be present between the layers 2, 4, 6, and no hard transitions or separate regions are present.

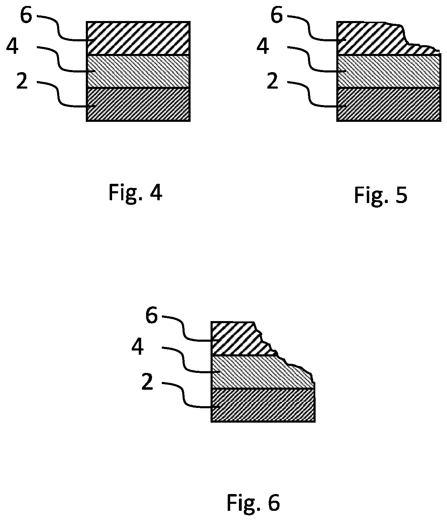

In the following, an example of a radial or axial layer construction of the bearing component 1, in particular of a plain bearing component, is described with reference to Figures 4 to 6. The outermost layer 6 can be configured, for example, as a sliding layer. Other types of layers that are adapted to other requirements are also possible, such as, for example, a friction layer.

In the example described here, as is shown in Fig. 4, a wear-indicator layer 4 is first applied onto the base body 2, and onto this wear indicator layer 4 the sliding layer 6 is applied, wherein the wear indicator layer 4 serves to show wear of the sliding layer 6. Although not depicted, arbitrarily many further layers can be present between the base body 2 and the wear indicator layer 4; or the base body 2, the wear-indicator layer 4, and/or the sliding layer 6 can be comprised of arbitrarily many individual cold-spray layers.

If the sliding layer 6 is worn down, as is the case in operation, for example, by a sliding between the bearing component 1 and a counter-surface, the sliding layer 6 becomes thinner (see Fig. 5). As soon as the sliding layer 6 is further removed, a contact arises between the counter surface and the wear indicator layer 4, whereby it is also carried away, as is shown in Fig. 6.

In this state, elements of the wear indicator layer 4 can be detected in the lubricant, for example, by analysis of the lubricant composition, which indicates that the sliding layer 6 is at least no longer completely present. In this way an exchange of the bearing component 1 or a renewal of the sliding layer 6 can be effected at an early stage in order to prevent damage to the bearing.

Alternatively or additionally, wear of the sliding layer 6 can also be visually detected by an inspection during a dismantling of the bearing, for example, by a different coloring of the sliding layer 6 and of the wear indicator layer 4.

Due to the bearing component described above, it is possible in a simple manner to make possible an individual manufacturing of bearing components having variable size and dimensions, as well as variable material composition, density, or porosity.

### REFERENCE NUMBER LIST

- 1: Bearing component
- 2: Base body
- 4: Wear indicator layer
- 6: Sliding surface

## Claims

1. Bearing component (1) that is comprised of a plurality of radially and/or axially extending layers (2, 4, 6), **characterized in that** the plurality of layers (2, 4, 6) are applied one atop the other using a cold-spray method,
wherein a first layer (2) of the plurality of radially and/or axially extending layers (2, 4, 6) is formed as a base body of the bearing component (1) using the cold-spray method, and
wherein the further layers (4, 6) of the plurality of radially and/or axially extending layers (2, 4, 6) are applied onto the base body (2) using the cold-spray method,
wherein the plurality of layers (2, 4, 6) are applied using the cold-spray method onto a non-dimensionally stable carrier material, in particular a metal film, or are applied onto a dimensionally stable carrier material whose volume is less than 50% of the volume of the bearing component (1), and wherein the carrier material remains on the bearing component (1).

2. Bearing component according to one of the preceding claims, wherein the plurality of layers (2, 4, 6) are applied in a hollow mold or onto a base plate, wherein the hollow mold or the base plate is removable.

3. Bearing component according to one of the preceding claims, wherein the plurality of radially and/or axially extending layers differ in their density and/or porosity.

4. Bearing component according to one of the preceding claims, wherein at least one of the layers (2, 4, 6) is comprised of a material composition.

5. Bearing component according to claim 4, wherein the at least one layer (2, 4, 6) includes at least one first region including a first material composition, and at least one second region including a second material composition, wherein the first material composition and the second material composition are different.

6. Bearing component according to claim 5, wherein the first material composition and the second material composition are adapted to different requirements, in particular to sliding properties and/or load.

7. Bearing component according to one of claims 4 to 6, wherein the at least one layer (2, 4, 6) includes three regions in radial and/or axial extension of the bearing component (1), wherein the first and the third region include the first material composition, and the second region includes the second material composition.

8. Bearing component according to one of the preceding claims, wherein a radially and/or axially outermost or innermost layer has the function of a sliding layer (6).

9. Bearing component according to claim 8, wherein a layer (4) under the sliding layer (6) has the function of a wear indicator layer.

## Patentansprüche

1. Lagerbauteil (1), das mehrere sich radial und/oder axial erstreckende Schichten (2, 4, 6) umfasst, **dadurch gekennzeichnet, dass** die mehreren Schichten (2, 4, 6) unter Verwendung eines Kaltsprühverfahrens übereinander aufgebracht werden,
wobei eine erste Schicht (2) der mehreren sich radial und/oder axial erstreckenden Schichten (2, 4, 6) unter Verwendung des Kaltsprühverfahrens als ein Grundkörper des Lagerbauteils (1) gebildet wird und
wobei die weiteren Schichten (4, 6) der mehreren sich radial und/oder axial erstreckenden Schichten (2, 4, 6) unter Verwendung des Kaltsprühverfahrens auf den Grundkörper (2) aufgebracht werden,
wobei die mehreren Schichten (2, 4, 6) unter Verwendung des Kaltsprühverfahrens auf ein nicht formstabiles Trägermaterial, insbesondere auf eine Metallfolie, aufgebracht werden oder auf ein formstabiles Trägermaterial aufgebracht werden, dessen Volumen weniger als 50 % des Volumens des Lagerbauteils (1) beträgt, und wobei das Trägermaterial auf dem Lagerbauteil (1) verbleibt.

2. Lagerbauteil nach einem der vorhergehenden Ansprüche, wobei die mehreren Schichten (2, 4, 6) in einer Hohlform oder auf einer Grundplatte aufgebracht sind, wobei die Hohlform oder die Grundplatte entfernbar ist.

3. Lagerbauteil nach einem der vorhergehenden Ansprüche, wobei die mehreren sich radial und/oder axial erstreckenden Schichten sich in ihrer Dichte und/oder Porosität unterscheiden.

4. Lagerbauteil nach einem der vorhergehenden Ansprüche, wobei mindestens eine der Schichten (2, 4, 6) eine Materialzusammensetzung umfasst.

5. Lagerbauteil nach Anspruch 4, wobei die mindestens eine Schicht (2, 4, 6) mindestens einen ersten Bereich, der eine erste Materialzusammensetzung beinhaltet, und mindestens einen zweiten Bereich beinhaltet, der eine zweite Materialzusammensetzung beinhaltet, wobei die erste Materialzusammensetzung und die zweite Materialzusammensetzung unterschiedlich sind.

6. Lagerbauteil nach Anspruch 5, wobei die erste Materialzusammensetzung und die zweite Materialzusammensetzung an unterschiedliche Anforderungen angepasst sind, insbesondere an Gleiteigenschaften und/oder Belastung.

7. Lagerbauteil nach einem der Ansprüche 4 bis 6, wobei die mindestens eine Schicht (2, 4, 6) drei Bereiche in radialer und/oder axialer Ausdehnung des Lagerbauteils (1) beinhaltet, wobei der erste und der dritte Bereich die erste Materialzusammensetzung beinhalten und der zweite Bereich die zweite Materialzusammensetzung beinhaltet.

8. Lagerbauteil nach einem der vorhergehenden Ansprüche, wobei eine radial und/oder axial äußerste oder innerste Schicht die Funktion einer Gleitschicht (6) aufweist.

9. Lagerbauteil nach Anspruch 8, wobei eine Schicht (4) unter der Gleitschicht (6) die Funktion einer Verschleißindikatorschicht aufweist.

## Revendications

1. Composant de palier (1) qui est constitué d'une pluralité de couches (2, 4, 6) s'étendant radialement et/ou axialement, **caractérisé en ce que** la pluralité de couches (2, 4, 6) sont appliquées l'une au-dessus de l'autre à l'aide d'un procédé de pulvérisation à froid, une première couche (2) de la pluralité de couches (2, 4, 6) s'étendant radialement et/ou axialement étant formée comme un corps de base du composant de palier (1) à l'aide du procédé de pulvérisation à froid, et
les autres couches (4, 6) de la pluralité de couches (2, 4, 6) s'étendant radialement et/ou axialement étant appliquées sur le corps de base (2) à l'aide du procédé de pulvérisation à froid,
la pluralité de couches (2, 4, 6) étant appliquées par pulvérisation à froid sur un matériau support non dimensionnellement stable, en particulier un film métallique, ou étant appliquées sur un matériau support dimensionnellement stable dont le volume fait moins de 50 % du volume du composant de palier (1), et le matériau support restant sur le composant de palier (1).

2. Composant de palier selon l'une quelconque des revendications précédentes, dans lequel la pluralité de couches (2, 4, 6) sont appliquées dans un moule creux ou sur une plaque de base, le moule creux ou la plaque de base étant amovible.

3. Composant de palier selon l'une quelconque des revendications précédentes, dans lequel la pluralité de couches s'étendant radialement et/ou axialement diffèrent dans leur densité et/ou porosité.

4. Composant de palier selon l'une quelconque des revendications précédentes, dans lequel au moins l'une des couches (2, 4, 6) est constituée d'une composition de matériau.

5. Composant de palier selon la revendication 4, dans lequel l'au moins une couche (2, 4, 6) inclut au moins une première région incluant une première composition de matériau, et au moins une deuxième région incluant une deuxième composition de matériau, la première composition de matériau et la deuxième composition de matériau étant différentes.

6. Composant de palier selon la revendication 5, dans lequel la première composition de matériau et la deuxième composition de matériau sont adaptées à des exigences différentes, en particulier à des propriétés de glissement et/ou à une charge.

7. Composant de palier selon l'une quelconque des revendications 4 à 6, dans lequel l'au moins une couche (2, 4, 6) inclut trois régions en extension radiale et/ou axiale du composant de palier (1), la première et la deuxième région incluant la première composition de matériau et la deuxième région incluant la deuxième composition de matériau.

8. Composant de palier selon l'une des revendications précédentes, dans lequel une couche radialement et/ou axialement la plus extérieure ou la plus intérieure a la fonction d'une couche de glissement (6).

9. Composant de palier selon la revendication 8, dans lequel une couche (4) sous la couche de glissement (6) a la fonction d'une couche indicatrice d'usure.
